# EUROPÄISCHE PATENTSCHRIFT

(11) **EP 3 661 833 B1**
(45) Veröffentlichungstag und Bekanntmachung des Hinweises auf die Patenterteilung: **17.11.2021**
(21) Anmeldenummer: 18749779.7
(22) Anmeldetag: 01.08.2018
(51) Int. Cl.: B62D 5/04

(54) **SPIELREDUKTION EINES SCHNECKENGETRIEBES EINER ELEKTROMECHANISCHEN SERVOLENKUNG MITTELS BIMETALLFEDER**
REDUCTION OF PLAY OF A WORM GEAR OF AN ELECTROMECHANICAL POWER STEERING SYSTEM BY MEANS OF A BIMETAL SPRING
RÉDUCTION DU JEU D'UN ENGRENAGE À VIS SANS FIN D'UNE DIRECTION ASSISTÉE ÉLECTROMÉCANIQUE AU MOYEN D'UN RESSORT BIMÉTALLIQUE

(30) Priorität: 04.08.2017 DE 102017117724
(43) Veröffentlichungstag der Anmeldung: 10.06.2020
(73) Patentinhaber: thyssenkrupp Presta AG, 9492 Eschen (LI); thyssenkrupp AG, 45143 Essen (DE)
(72) Erfinder: BACHMANN, Andreas, 88085 Langenargen (DE)
(74) Vertreter: thyssenkrupp Intellectual Property GmbH
(86) Internationale Anmeldenummer: PCT/EP2018/070841
(87) Internationale Veröffentlichungsnummer: WO 2019/025481

(56) Entgegenhaltungen:
- DE-A1- 19 624 074
- DE-A1-102013 007 883
- DE-A1-102014 110 306
- JP-A- 2014 077 639
- JP-A- 2016 028 931

## Beschreibung

Die vorliegende Erfindung betrifft ein Schneckengetriebe einer elektromechanischen Servolenkung eines Kraftfahrzeuges mit den Merkmalen des Oberbegriffs des Anspruchs 1 und eine elektromechanische Servolenkung mit den Merkmalen des Oberbegriffs des Anspruchs 9.

Eine gattungsgemäße elektromechanische Servolenkung weist einen elektrischen Servomotor auf, der eine Schneckenwelle antreibt, die mit einem auf einer Lenkwelle angeordneten Schneckenrad kämmt, wobei das Schneckenrad mit einer Eingangswelle eines Lenkgetriebes in Wirkverbindung steht und wobei die Schneckenwelle und die Lenkwelle in einem gemeinsamen Getriebegehäuse drehbar gelagert sind.

Elektromechanische Kraftfahrzeuglenkungen müssen sowohl bei niedrigen (beispielsweise bei bis zu -40°C) Temperaturen als auch bei hohen Temperaturen (beispielsweise bei bis zu +80°C) funktionsfähig sein. Allerdings ziehen sich Bauteile bei Minustemperaturen zusammen, während sie sich bei hohen Temperaturen ausdehnen. Im Schneckengetriebe kommt es bei niedrigen Umgebungstemperaturen zu einem größeren Spiel im Eingriff zwischen den Verzahnungen, da sich das Schneckenrad (und/oder die Schneckenwelle) zusammenzieht. Das Resultat sind unerwünschte Geräusche in der Lenkung. Bei hohen Temperaturen dehnt sich das Schneckenrad hingegen aus, sodass hohe Kräfte in der Verzahnung entstehen, die zum Verschleiß der Bauteile beitragen.

Die Offenlegungsschrift KR 1020080000730 A offenbart eine Formgedächtnislegierung, welche zwischen Getriebegehäuse und Lageraußenring positioniert ist und so die Temperaturunterschiede zwischen Schneckenwelle und Schneckenrad ausgleicht. Als nachteilig erweist sich dieser Werkstoff, da er mit zunehmenden Arbeitszyklen schlechter funktioniert und teuer ist.

Aus der DE 10 2013 007 883 A1 ist ein Schneckengetriebe für eine elektromechanische Servolenkung eines Kraftfahrzeuges mit einer Schneckenwelle bekannt, die über eine Schneckenverzahnung mit einem Schneckenrad kämmt, wobei das Schneckenrad und die Schneckenwelle in einem gemeinsamen Getriebegehäuse angeordnet sind. Bei dieser können ebenfalls die genannten Probleme auftreten.

Es ist deshalb Aufgabe der vorliegenden Erfindung, ein Schneckengetriebe für eine elektromechanische Servolenkung anzugeben, das eine verbesserte Temperaturkompensation sowie Geräuschreduktion aufweist und gleichzeitig kostengünstig herstellbar ist.

Diese Aufgabe wird von einem Schneckengetriebe für eine elektromechanische Servolenkung eines Kraftfahrzeuges mit den Merkmalen des Anspruchs 1 und von einer elektromechanischen Servolenkung mit den Merkmalen des Anspruchs 9 gelöst.

Demnach ist bei einem Schneckengetriebe für eine elektromechanische Servolenkung eines Kraftfahrzeuges mit einer Schneckenwelle, die über eine Schneckenverzahnung mit einem Schneckenrad kämmt, wobei das Schneckenrad und die Schneckenwelle in einem gemeinsamen Getriebegehäuse angeordnet sind, erfindungsgemäß vorgesehen, dass ein Exzenterhebel und eine mit dem Exzenterhebel in Wirkverbindung stehende Bimetallfeder ein temperaturbedingtes Spiel im Eingriff zwischen dem Schneckenrad und der Schneckenwelle ausgleichen, wobei zwischen dem Getriebegehäuse und der Bimetallfeder ein Keilelement vorgesehen ist, das sich an einem Anschlagstift an dem Getriebegehäuse abstützt und dass das Keilelement zwischen dem Getriebegehäuse und dem Exzenterhebel angeordnet ist, so dass durch Bewegung des Keilelements der Exzenterhebel auf das Schneckenrad hinbewegt oder von dem Schneckenrad wegbewegt werden kann.

Die Bimetallfeder sorgt für eine verbesserte Temperaturkompensation sowie Geräuschreduktion. Zudem ist diese Lösung besonders kostengünstig. Vorzugsweise ist die Bimetallfeder spiralförmig.

Der Exzenterhebel ist Teil eines Schwenklagers zur Einstellung einer Vorspannung des Eingriffs zwischen Schneckenwelle und Schneckenrad, sodass die Temperaturkompensation besonders wenig Bauraum braucht.

Die Bimetallfeder ist vorzugsweise auf einem Mitnehmer angeordnet, der im Getriebegehäuse drehfest gehalten ist. Der Mitnehmer weist bevorzugt auf einer der Schneckenwelle zugewandten Seite einen Schlitz auf, in welchem ein zweites freies Ende der Bimetallfeder aufgenommen ist.

Erfindungsgemäß ist zwischen dem Getriebegehäuse und der Bimetallfeder ein Keilelement vorgesehen, das sich an einem Anschlagstift an dem Getriebegehäuse abstützt, wobei das Keilelement zwischen dem Getriebegehäuse und dem Exzenterhebel angeordnet ist, so dass durch Bewegung des Keilelements der Exzenterhebel auf das Schneckenrad hinbewegt oder von dem Schneckenrad wegbewegt werden kann. Der Exzenterhebel weist bevorzugt an seiner Aussenumfangsfläche im Bereich des Anschlagstifts einen elastischen Dämpfer auf, sodass dadurch Geräusche reduziert werden können. Der Dämpfer kann ringförmig ausgebildet sein, sodass dieser zwischen einem Wälzlager des Schwenklagers und dem Exzenterhebel vorgesehen ist und einen Vorsprung hat, welcher in Kontakt mit dem Anschlagstift oder dem Keilelement steht. Der ringförmige Dämpfer kann an seiner Aussenumfangsfläche Formschlusselemente aufweisen, mit welchen er mit der Kontur der Bohrung des Exzenterhebels in Eingriff steht.

Vorzugsweise sind die Bimetallfeder und das Keilelement derart ausgestaltet, dass bei höheren Temperaturen, bevorzugt bei Temperaturen grösser oder gleich +10°C, im Bereich des Exzenterhebels ein Bereich des Keilelements mit geringerer Dicke und bei geringeren Temperaturen, bevorzugt bei Temperaturen kleiner oder gleich +5°C, ein Bereich des Keilelements mit größerer Dicke angeordnet ist. Die geringere Dicke des Keilelements liegt dabei bevorzugt in einem Bereich zwischen 0,1 mm und 0,14 mm. Die größere Dicke des Keilelements liegt bevorzugt in einem Bereich zwischen 1,3mm und 2mm. Dadurch werden bei höheren Temperaturen die Kräfte im Getriebe und bei geringeren Temperaturen das Spiel reduziert.

Es kann vorgesehen sein, dass die Bimetallfeder des Schwenklagers vorspannt und dazu an ihrem ersten freien Ende auf einem Vorsprung des Exzenterhebels aufliegt.

In einer anderen Ausführungsform ist der Exzenterhebel mit der Bimetallfeder vorzugsweise in einem separaten Gehäuse angeordnet.

Dabei ist es vorteilhaft, wenn die Bimetallfeder spiralförmig und auf einem Federhalter angeordnet ist, der in einer ersten Öffnung des Exzenterhebels aufgenommen ist, wobei der Federhalter in dem separaten Gehäuse gelagert ist und wobei in einem zulaufenden Bereich des Exzenterhebels eine zweite Öffnung, welche kleiner ist als die erste Öffnung, zur Aufnahme eines parallel zum Federhalter angeordneten Mitnehmers vorgesehen ist, auf dem die Bimetallfeder an ihrem ersten freien Ende sitzt. Der Exzenterhebel ist in diesem Fall nicht Teil des Schwenklagers, das zur Einstellung der Vorspannung des Eingriffs zwischen der Schneckenwelle und des Schneckenrades vorgesehen ist. Es ist daher bevorzugt, dass ein Anschlag des Exzenterhebels über einen Anschlagstift oder direkt an einem Schwenkhebel des separaten Schwenklagers erfolgt.

Weiterhin ist eine elektromechanische Servolenkung mit einem zuvor genannten Schneckengetriebe vorgesehen, wobei die elektromechanische Servolenkung einen elektrischen Servomotor, der die Schneckenwelle antreibt, die über die Schneckenverzahnung mit dem auf einer Lenkwelle angeordneten Schneckenrad kämmt, aufweist, wobei das Schneckenrad mit einer Eingangswelle eines Lenkgetriebes in Wirkverbindung steht und wobei die Schneckenwelle und die Lenkwelle in einem gemeinsamen Getriebegehäuse drehbar gelagert sind.

Bevorzugte Ausführungsformen der Erfindung werden nachfolgend anhand der Zeichnungen näher erläutert. Gleichartige oder gleichwirkende Bauteile werden in den Figuren mit denselben Bezugszeichen bezeichnet. Es zeigen:
- Fig. 1:: eine räumliche Darstellung eines Getriebes einer elektromechanischen Servolenkung,
- Fig. 2:: eine räumliche Ansicht von oben auf das Getriebe der Figur 1,
- Fig. 3, 4:: eine Draufsicht auf einen Exzenterhebel des Schneckengetriebes in zwei verschiedenen Zuständen,
- Fig. 5:: eine Explosionszeichnung des Exzenterhebels,
- Fig. 6:: eine räumliche Ansicht eines weiteren Exzenterhebels ohne Schraubenfeder,
- Fig. 7:: eine Explosionszeichnung der Ausführungsform der Figur 6,
- Fig. 8:: eine räumliche Darstellung eines Getriebes mit einem Exzenterhebel der in einem separaten Gehäuse angeordnet ist,
- Fig. 9:: eine Draufsicht auf den Exzenterhebel der Fig. 8,
- Fig. 10, 11:: eine Darstellung der Funktionsweise des Exzenterhebels der Fig. 8, sowie
- Fig. 12:: eine Explosionszeichnung des Exzenterhebels der Fig. 8.

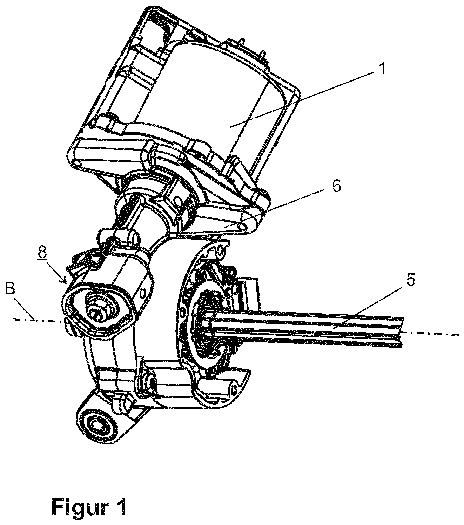

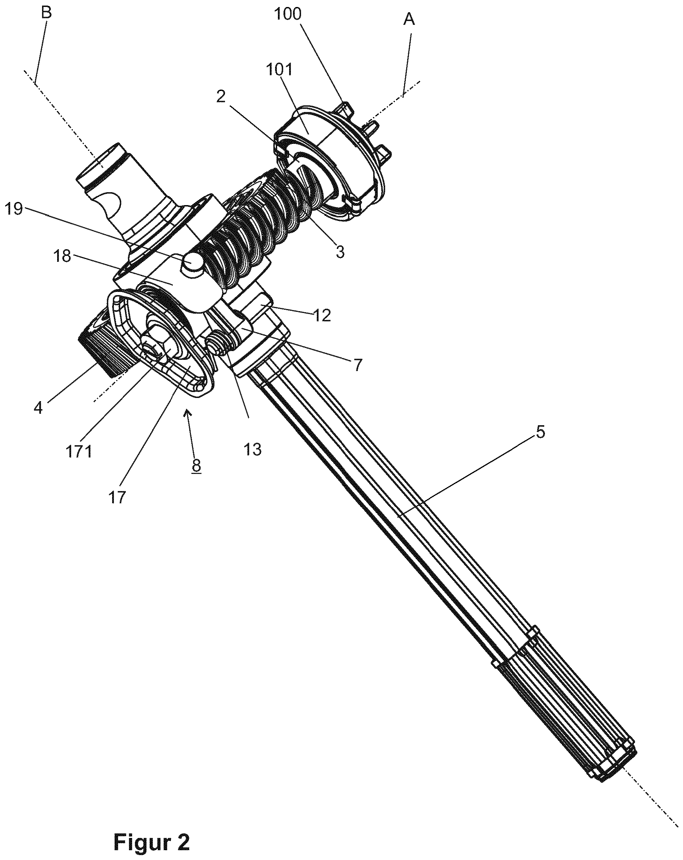

In den Figuren 1 bis 5 ist eine erste Ausführungsform der Erfindung dargestellt. Ein Elektromotor 1 treibt eine Schneckenwelle 2 an. Der Elektromotor 1 verfügt über eine Motorwelle, die über eine Kupplung, mit der Schneckenwelle 2 drehfest gekoppelt ist und entlang einer Schneckenwellenachse A angeordnet ist. Die Kupplung besteht aus zwei Kupplungsteilen, wobei das erste nicht dargestellte Kupplungsteil an der Motorwelle angeordnet ist, während das zweite Kupplungsteil 100 auf der Schneckenwelle 2 angeordnet ist. Die Schneckenwelle 2 kämmt über eine Schneckenverzahnung 3 mit einem Schneckenrad 4. Das Schneckenrad 4 wiederum ist drehfest mit einer Lenkwelle 5 verbunden, welche entlang einer Achse B, die quer zur Schneckenwellenachse A verläuft, angeordnet ist und um diese rotiert. Die Lenkwelle verläuft zwischen einem nicht dargestellten Lenkrad und dem Lenkgetriebe des Kraftfahrzeugs. Die genannten Bauelemente sind in einem gemeinsamen Getriebegehäuse 6 gelagert. Die Schneckenwelle 2 ist in dem Getriebegehäuse 6 mittels einer motornahen Lageranordnung 101 und einer motorfernen Lageranordnung 8 gelagert.

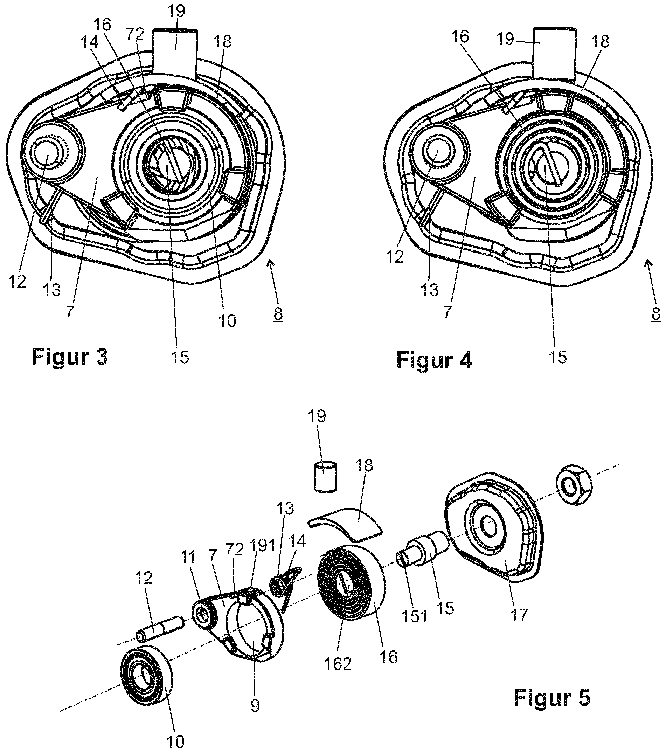

Die Vorspannung zwischen der Schneckenwelle 2 und dem Schneckenrad 4 kommt durch einen am motorfernen Ende der Schneckenwelle 2 angeordneten, tropfenförmigen Exzenterhebel 7 zustande, der mittels des Lagers 8 mit dem Gehäuse 6 in Verbindung steht. Der Exzenterhebel 7 weist in einem Bereich mit einem größeren Radius, welcher entlang der Schneckenwellenachse A verläuft, eine erste Öffnung 9 auf, die ein am motorfernen Ende der Schneckenwelle 2 angeordnetes Wälzlager 10 aufnimmt. Das Wälzlager 10 lagert in Form eines Kugellagers die Schneckenwelle 2 drehbar und sitzt mit seinem Außenring in einem entsprechenden Lagersitz des Exzenterhebels 7. In einem zulaufenden Bereich oder einem Bereich mit kleinerem Radius des Exzenterhebels 7 ist eine zweite Öffnung 11 zur Aufnahme eines parallel zur Schneckenwelle 2 angeordneten Stifts 12 des Lagers 8 vorgesehen, wodurch der Exzenterhebel 7 schwenkbar um eine Schwenkachse am Gehäuse 6 gelagert wird. Die zweite Öffnung 11 ist dabei kleiner ausgebildet als die erste Öffnung 9. Die erste Öffnung 9 ist mindestens dreimal so groß wie die zweite Öffnung 11. Dabei umgibt eine Schraubenfeder 13 oder Schenkelfeder, die auf Zug wirkt, den Stift 12 konzentrisch und greift mittels eines Hakens 14 an einem Einschnitt 72 des Exzenterhebels 7 an, der in etwa in der Ebene des Schneckenrads 4 liegt. Durch die Zugspannung der Schraubenfeder 13 wird der schwenkbar gelagerte Exzenterhebel 7 in seiner Bewegungsfreiheit eingeschränkt und eine elastische Vorspannung der Schneckenwelle 2 gegen das Schneckenrad 4 erzielt. Zwischen dem Exzenterhebel 7 und einem Gehäusedeckel 17 des Gehäuses 6 ist, wie in Figur 5 dargestellt, eine auf einem Mitnehmer 15 sitzende Bimetallfeder 16 angeordnet. Hierzu weist der Mitnehmer 15 an einer der Schneckenwelle zugewandten Seite einen Schlitz 151 auf, in welchem ein zweites freies Ende 162 der Bimetallfeder 16 aufgenommen ist. Die Bimetallfeder 16 umgibt den Mitnehmer 15 im Wesentlichen spiralförmig. Der Mitnehmer 15 ist in dem Gehäusedeckel 17 des Gehäuses 6 über eine Mutter 171, welche auf der von der Schneckenwelle abgewandten Seite angeordnet ist, drehfest befestigt. Hierzu weist der Mitnehmer 15 eine Kontur auf, beispielsweise einen Schlitz oder Kreuzschlitz, ein Sechskantprofil oder ein Innensechsrundprofil, sodass darin mittels eines Werkzeugs die Mutter 171 angezogen werden kann. Zwischen dem Getriebegehäuse 6 und der Bimetallfeder 16 ist ein Keilelement 18 vorgesehen, dass sich durch einen im Gehäuse 6 angeordneten Anschlagstift 19 in Richtung des Exzenterhebels hinbewegt oder wegbewegt, so dass das Spiel eingestellt werden kann. Im Bereich des Anschlagstifts 19 kann der Exzenterhebel 7 zur Geräuschminimierung einen elastischen Dämpfer 191 aufweisen, auf welchen der Anschlagstift das Keilelement 18 hinbewegt oder wegbewegt. Die Bimetallfeder 16 ist so ausgestaltet, dass sie den an dem Keilelement 18 und dem Anschlagstift 19 abgestützten Exzenterhebel 7 und die darin gelagerte Schneckenwelle 2 bei niedrigen Temperaturen auf das Schneckenrad 4 zustellt, um das Spiel zwischen der Schneckenwelle 2 und dem Schneckenrad 4 zu kompensieren. Bei hohen Umgebungstemperaturen werden hingegen der Exzenterhebel 7 und die darin gelagerte Schneckenwelle 2 von dem Schneckenrad 4 wegbewegt, so dass Kräfte oder Spannungen vermieden werden können. Die Bimetallfeder besteht aus zwei Schichten unterschiedlicher Metalle, welche miteinander verschweisst, vernietet oder verklebt sind, wobei die erste Schicht vorzugsweise eine Eisenlegierung, wie Stahl, ist und die zweite Schicht beispielsweise aus Kupfer oder Zink ist.

Figur 3 zeigt die Anordnung des Exzenterhebels bei warmen Temperaturen. Die Bimetallfeder 16 verschiebt das Keilelement derart, dass der Exzenterhebel 7 sich von der Schneckenwelle 2 wegbewegt, wodurch Kräfte und Spannung in dem Eingriff von Schneckenwelle 2 und Schneckenrad 4 vermieden werden können. In der Figur 4 ist der Zustand bei kalten Temperaturen dargestellt. Die Bimetallfeder 16 verschiebt das Keilelement 18 in einen Bereich größerer Dicke und die Schneckenwelle 2 wird auf das Schneckenrad 4 zugestellt, wodurch sich das Spiel im Eingriff zwischen der Schneckenwelle 2 und dem Schneckenrad 4 verringert.

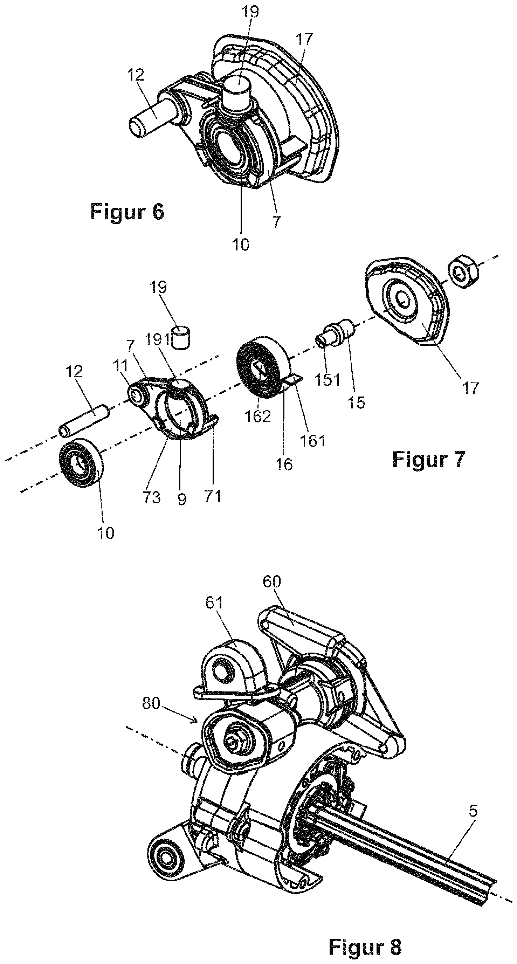

In den Figuren 6 und 7 ist eine Ausführungsform gezeigt, bei der auf die Schraubenfeder verzichtet wurde. Die Bimetallfeder 16 bringt dabei die nötigen Vorspannkräfte auf und gleicht Temperaturunterschiede im Getriebe aus. Die Bimetallfeder 16 liegt dazu an ihrem ersten freien Ende 161 auf einem Vorsprung 71 des Exzenterhebels 7 auf. Der Exzenterhebel stützt sich an dem Gehäuse 6 über einen Anschlagsstift 9 ab. Zwischen dem Exzenterhebel 7 und dem Wälzlager 10 ist zur Geräuschreduktion ein ringförmiges Dämpfelement 73 vorgesehen, welches einen Vorsprung 191 aufweist, der in eine Öffnung des Exzenterhebels hineinragt und mit dem Anschlagstift 19 in Kontakt steht. Der Exzenterhebel 7 hat in der ersten Öffnung 9 Formschlusselemente, welche mit den Formschlusselementen der Dämpferhülse 73 zusammenwirkt.

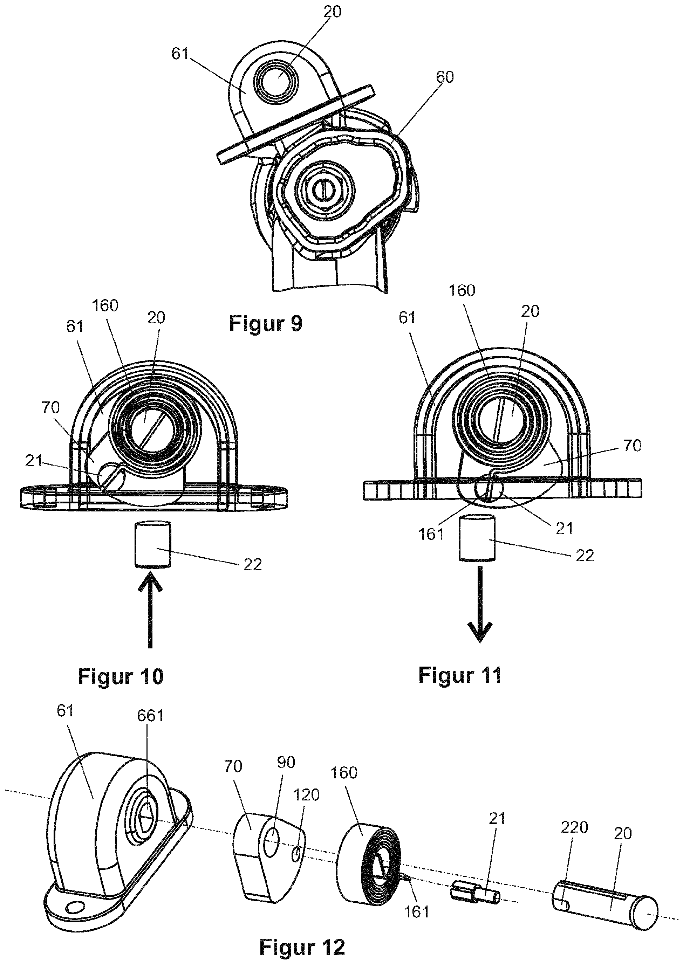

In den Figuren 8 bis 12 ist eine weitere Ausführungsform der Erfindung dargestellt. Am Außenumfang des Schneckengetriebegehäuses 60 ist ein Exzenterhebel 70 mit einer Bimetallfeder 160 in einem separaten Gehäuse 61 angeordnet. Die spiralförmige Bimetallfeder 160 ist auf einem gespreizten oder nicht vollständig geschlitzten Federhalter 20 angeordnet, der in der Mitte der Feder 160 sitzt. Der Federhalter 20 weist eine Verdrehsicherung 220 auf, welche mit einer Verdrehsicherung 661 des Gehäuses 61 zusammenwirkt. Der tropfenförmige Exzenterhebel 70 weist in einem Bereich mit kleinerem Radius eine erste Öffnung 90 auf, die den Federhalter 20 aufnimmt. Der Federhalter 20 ist in dem Gehäuse 61 gelagert und lagert den Exzenterhebel 70 über die erste Öffnung 90. In einem zulaufenden Bereich des Exzenterhebels 70 ist eine zweite deutlich kleinere Öffnung 120 in einem Bereich mit größerem Radius zur Aufnahme eines parallel zum Federhalter 20 angeordneten Mitnehmers 21 vorgesehen, auf dem die Bimetallfeder 160 an ihrem äußeren Ende sitzt. Bei kalten Temperaturen, wie in Figur 11 dargestellt, ist der Exzenterhebel 70 mittels der Metallfeder 160 ausgefahren, um das Spiel zwischen Schneckenwelle 2 und Schneckenrad 4 zu kompensieren. Während der Hebel 70 bei hohen oder warmen Umgebungstemperaturen eingefahren wird, wie in Figur 10 dargestellt, um Kräfte oder Spannungen zu vermeiden. Der Anschlag des Exzenterhebels 70 erfolgt über einen beweglichen Anschlagstift 22 oder direkt an einem Schwenkhebel des Schwenklagers 23, welcher dazu im Eingriffsbereich einen Dämpfer aufweist (nicht dargestellt).

## Patentansprüche

1. Schneckengetriebe für eine elektromechanische Servolenkung eines Kraftfahrzeuges mit einer Schneckenwelle (2), die über eine Schneckenverzahnung (3) mit einem Schneckenrad (4) kämmt, wobei das Schneckenrad (4) und die Schneckenwelle (2) in einem gemeinsamen Getriebegehäuse (6) angeordnet sind, **dadurch gekennzeichnet, dass** ein Exzenterhebel (7) und eine mit dem Exzenterhebel (7) in Wirkverbindung stehende Bimetallfeder (16) ein temperaturbedingtes Spiel im Eingriff zwischen dem Schneckenrad (4) und der Schneckenwelle (2) ausgleichen, wobei zwischen dem Getriebegehäuse (6) und der Bimetallfeder (16) ein Keilelement (18) vorgesehen ist, das sich an einem Anschlagstift (19) an dem Getriebegehäuse (6) abstützt und dass das Keilelement (18) zwischen dem Getriebegehäuse (6) und dem Exzenterhebel (7) angeordnet ist, so dass durch Bewegung des Keilelements (18) der Exzenterhebel (7) auf das Schneckenrad (4) hinbewegt oder von dem Schneckenrad (4) wegbewegt werden kann.

2. Schneckengetriebe nach Anspruch 1, **dadurch gekennzeichnet, dass** der Exzenterhebel (7) Teil eines Schwenklagers (8) zur Einstellung des Eingriffs zwischen Schneckenwelle (2) und Schneckenrad (4) ist.

3. Schneckengetriebe nach Anspruch 1 oder 2, **dadurch gekennzeichnet, dass** die Bimetallfeder (16) spiralförmig ist und auf einem Mitnehmer (15) angeordnet ist, der im Getriebegehäuse (6) drehfest gehalten ist.

4. Schneckengetriebe nach einem der vorhergehenden Ansprüche, **dadurch gekennzeichnet, dass** die Bimetallfeder (16) und das Keilelement (18) derart ausgestaltet sind, dass bei höheren Temperaturen im Bereich des Exzenterhebels (7) ein Bereich des Keilelements mit geringerer Dicke und bei geringeren Temperaturen ein Bereich des Keilelements (18) mit größerer Dicke angeordnet ist.

5. Schneckengetriebe nach Anspruch 2, **dadurch gekennzeichnet, dass** die Bimetallfeder (16) das Schwenklager (8) vorspannt und dazu an ihrem ersten freien Ende (161) auf einem Vorsprung (71) des Exzenterhebels (7) aufliegt.

6. Schneckengetriebe nach Anspruch 1, **dadurch gekennzeichnet, dass** der Exzenterhebel (70) mit der Bimetallfeder (160) in einem separaten Gehäuse (61) angeordnet ist.

7. Schneckengetriebe nach Anspruch 6, **dadurch gekennzeichnet, dass** die Bimetallfeder (160) spiralförmig ist und auf einem Federhalter (20) angeordnet ist, der in einer ersten Öffnung (90) des Exzenterhebels (70) aufgenommen ist, wobei der Federhalter (20) in dem separaten Gehäuse (61) gelagert ist und dass in einem zulaufenden Bereich des Exzenterhebels (70) eine zweite Öffnung (120), welche kleiner ist als die erste Öffnung (90), zur Aufnahme eines parallel zum Federhalter (20) angeordneten Mitnehmers (21) vorgesehen ist, auf dem die Bimetallfeder (160) an ihrem ersten freien Ende(161) sitzt.

8. Schneckengetriebe nach Anspruch 6 oder 7, **dadurch gekennzeichnet, dass** ein Anschlag des Exzenterhebels (70) über einen Anschlagstift (22) oder direkt an einem Schwenkhebel eines Schwenklagers erfolgt.

9. Elektromechanische Servolenkung mit einem Schneckengetriebe nach einem der vorhergehenden Ansprüche und mit einem elektrischen Servomotor (1), der die Schneckenwelle (2) antreibt, die über die Schneckenverzahnung (3) mit dem auf einer Lenkwelle (5) angeordneten Schneckenrad (4) kämmt, wobei das Schneckenrad (4) mit einer Eingangswelle eines Lenkgetriebes in Wirkverbindung steht und wobei die Schneckenwelle (2) und die Lenkwelle (5) in einem gemeinsamen Getriebegehäuse (6) drehbar gelagert sind.

## Claims

1. A worm gear for an electromechanical power steering system of a motor vehicle, comprising a worm shaft (2) which meshes with a worm wheel (4) via a worm drive (3), wherein the worm wheel (4) and the worm shaft (2) are arranged together in a gear housing (6), **characterized in that** an eccentric lever (7) and a bimetallic spring (16) that is operatively connected with the eccentric lever (7) compensate for a temperature-related play in the engagement between the worm wheel (4) and the worm shaft (2), wherein a wedge element (18) is provided between the gear housing (6) and the bimetallic spring (16), which wedge element is braced against a stop pin (19) on the gear housing (6), and that the wedge element (18) is arranged between the gear housing (6) and the eccentric lever (7), such that the eccentric lever (7) can be moved toward the worm wheel (4) or moved away from the worm wheel (4) by moving the wedge element (18).

2. The worm gear as claimed in claim 1, **characterized in that** the eccentric lever (7) is part of a pivot bearing (8) for adjusting the engagement between the worm shaft (2) and the worm wheel (4).

3. The worm gear as claimed in claim 1 or 2, **characterized in that** the bimetallic spring (16) is spiral-shaped and is arranged on a tappet (15) which is mounted non-rotatably in the gear housing (6).

4. The worm gear as claimed in any one of the preceding claims, **characterized in that** the bimetallic spring (16) and the wedge element (18) are designed in such a way that an area of the wedge element with a lesser thickness is arranged in the area of the eccentric lever (7) at higher temperatures, and an area of the wedge element (18) with a greater thickness is arranged in the area of the eccentric lever (7) at lower temperatures.

5. The worm gear as claimed in claim 2, **characterized in that** the bimetallic spring (16) pretensions the pivot bearing (8) and that the bimetallic spring (16) rests on a protrusion (71) of the eccentric lever (7) with its first, free end (161) for this purpose.

6. The worm gear as claimed in claim 1, **characterized in that** the eccentric lever (70) with the bimetallic spring (160) is arranged in a separate housing (61).

7. The worm gear as claimed in claim 6, **characterized in that** the bimetallic spring (160) is spiral-shaped and is arranged on a spring holder (20), which is received in a first opening (90) of the eccentric lever (70), wherein the spring holder (20) is supported in the separate housing (61), and **in that** a second opening (120), which is smaller than the first opening (90), is provided in a tapered area of the eccentric lever (70) for receiving a tappet (21) on which the bimetallic spring (160) rests with its first, free end (161) and which is arranged parallel to the spring holder (20).

8. The worm gear as claimed in claim 6 or 7, **characterized in that** a stop of the eccentric lever (70) is implemented via a stop pin (22) or directly on a pivot lever of a pivot bearing.

9. An electromechanical power steering system having a worm gear as claimed in any one of the preceding claims and having an electric servo motor (1), which drives the worm shaft (2) that meshes with a worm wheel (4) arranged on a steering shaft (5) via the worm drive (3), wherein the worm wheel (4) is operatively connected with an input shaft of a steering gear, and wherein the worm shaft (2) and the steering shaft (5) are mounted rotatably together in a gear housing (6).

## Revendications

1. Engrenage à vis sans fin pour une direction assistée électromécanique d'un véhicule automobile, comprenant un arbre de vis sans fin (2) qui engrène avec une roue à vis sans fin (4) par l'intermédiaire d'une denture de vis sans fin (3), la roue à vis sans fin (4) et l'arbre de vis sans fin (2) étant disposés dans un carter d'engrenage commun (6),
**caractérisé en ce qu'**un levier à excentrique (7) et un ressort bimétallique (16) en relation active avec le levier à excentrique (7) compensent un jeu dû à la température au niveau de l'engrènement entre la roue à vis sans fin (4) et l'arbre de vis sans fin (2), dans lequel, entre le carter d'engrenage (6) et le ressort bimétallique (16) est prévue une cale (18) qui prend appui sur une goupille de butée (19) sur le carter d'engrenage (6), et **en ce que** la cale (18) est disposée entre le carter d'engrenage (6) et le levier à excentrique (7) de sorte qu'un mouvement de la cale (18) permet de rapprocher le levier à excentrique (7) de la roue à vis sans fin (4) ou de l'éloigner de la roue à vis sans fin (4).

2. Engrenage à vis sans fin selon la revendication 1, **caractérisé en ce que** le levier à excentrique (7) fait partie d'un palier pivotant (8) pour régler l'engrènement entre l'arbre de vis sans fin (2) et la roue à vis sans fin (4).

3. Engrenage à vis sans fin selon la revendication 1 ou 2, **caractérisé en ce que** le ressort bimétallique (16) est en forme de spirale et est disposé sur un tenon d'entraînement (15) qui est maintenu de manière verrouillée en rotation dans le carter d'engrenage (6).

4. Engrenage à vis sans fin selon l'une quelconque des revendications précédentes, **caractérisé en ce que** le ressort bimétallique (16) et la cale (18) sont configurés de telle sorte qu'à des températures plus hautes, une zone de la cale d'épaisseur inférieure est disposée au niveau du levier à excentrique (7), et à des températures plus basses, une zone de la cale (18) d'épaisseur supérieure est disposée au niveau du levier à excentrique.

5. Engrenage à vis sans fin selon la revendication 2, **caractérisé en ce que** le ressort bimétallique (16) précontraint le palier pivotant (8) et repose à cet effet par sa première extrémité libre (161) sur une saillie (71) du levier à excentrique (7).

6. Engrenage à vis sans fin selon la revendication 1, **caractérisé en ce que** le levier à excentrique (70) avec le ressort bimétallique (160) est disposé dans un carter (61) séparé.

7. Engrenage à vis sans fin selon la revendication 6, **caractérisé en ce que** le ressort bimétallique (160) est en forme de spirale et est disposé sur un support de ressort (20) qui est reçu dans une première ouverture (90) du levier à excentrique (70), le support de ressort (20) étant monté dans le carter séparé (61), et **en ce que** dans une partie conique du levier à excentrique (70) est prévue une deuxième ouverture (120) qui est plus petite que la première ouverture (90) pour recevoir un tenon d'entraînement (21) disposé en parallèle au support de ressort (20) et sur lequel le ressort bimétallique (160) repose à sa première extrémité libre (161).

8. Engrenage à vis sans fin selon la revendication 6 ou 7, **caractérisé en ce qu'**une mise en butée du levier à excentrique (70) est effectuée par l'intermédiaire d'une goupille de butée (22) ou directement au niveau d'un levier pivotant d'un palier pivotant.

9. Direction assistée électromécanique comprenant un engrenage à vis sans fin selon l'une quelconque des revendications précédentes et un servomoteur électrique (1) qui entraîne l'arbre de vis sans fin (2) qui engrène par l'intermédiaire de la denture de vis sans fin (3) avec une roue à vis sans fin (4) disposée sur un arbre de direction (5), la roue à vis sans fin (4) étant en relation active avec un arbre d'entrée d'un mécanisme de direction, et l'arbre de vis sans fin (2) et l'arbre de direction (5) étant montés rotatifs dans le même carter d'engrenage (6).
